# EUROPEAN PATENT APPLICATION

(11) **EP 2 829 175 A1**
(43) Date of publication of application: **28.01.2015**
(21) Application number: 14176368.0
(22) Date of filing: 09.07.2014
(51) Int. Cl.: A01K 95/02

(54) **Chod rig with a dropper for securing a lead**

(30) Priority: 26.07.2013 GB 201313413
(71) Applicant: Catchum 88 Limited, Hockley, Essex SS5 5LR (GB)
(72) Inventor: Nash, Kevin, Hockley, Essex SS5 5LR (GB)
(74) Representative: Harrison IP Limited

(57) **Abstract**

A dropper (30) for securing a lead (10) to a fishing line (12) of a chod rig that further includes a hook link (14) slidable along the fishing line (12) relative to the lead (10), said dropper (30) including a housing (32) for securing to the fishing line (12) and a resiliently biased catch member (34) movable relative to the housing (32) between a closed position in which the lead (10) is secured to the housing (32) and an open position in which the lead (10) is separable from the housing (32), the catch member (34) being movable relative to the housing (32) towards the open position by application of a force to it by the hook link (14), wherein said chod rig further comprises a gripper bead (20) slidably fitted to the fishing line (12) between the hook link (14) and the dropper (30).

## Description

### Field of the invention

The present invention relates to a chod rig, as used by anglers, and is concerned with releasing the lead from the fishing line in the event of its becoming entangled in undergrowth.

### Background of the invention

Anglers use a variety of terminal tackle, or rigs, for different fishing applications. In one form of rig, known as a bolt rig, the end of the line is attached to a hook and a lead is fixed to the line a short distance behind the hook. In an alternative rig, known as a running rig, the lead is free to run up the line. The term "lead" is used herein to describe any weight used by anglers and is not restricted as to the material from which it is made.

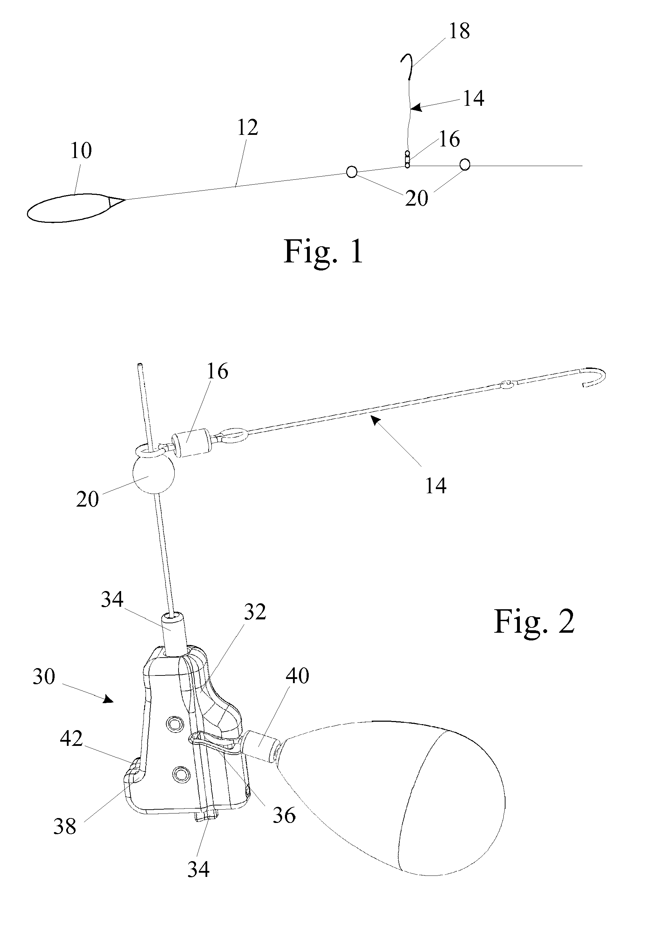

The present invention is concerned with a still further form of rig that is shown in Figure 1 of the accompanying drawings and is referred to as a chod rig, or sometimes as a helicopter rig. In a chod rig, it is the lead 10 that is attached to the end of the line 12 and a hook link 14 is free to run along the line. The hook link 14 has a swivel 16 at one end and a hook 18 at the other. Gripper beads 20 are fitted to the fishing line 12 on opposite sides of the hook link 14. The bait may be placed on the hook 18 or may be a floating ball attached to the hook 18 by a fine line.

A known problem of chod rigs is that the lead risks being entangled in undergrowth and if it cannot be released then the fish may be lost.

To overcome this problem, it has been proposed to connect the lead to the line by means of a device, herein referred to as a dropper, that holds the lead securely during casting but allows the lead to separate from the line if it meets an obstacle. The previous proposal relies on a PVA plug that dissolves in the water, but such rigs are fiddly to assemble and the disposable PVA plug has to be replaced with every casting.

### Object of the invention

The present invention seeks therefore to provide a dropper for attaching a lead to a fishing line in a chod rig that allows the lead to separate from the dropper if it meets an obstacle after a fish has been hooked, yet securely attaches the lead to the line during casting.

### Summary of the invention

According to the present invention, there is provided a dropper for securing a lead to a fishing line of a chod rig that further includes a hook link slidable along the fishing line relative to the lead, wherein the dropper includes a housing for securing to the fishing line and a resiliently biased catch member slidable relative to the housing between a closed position in which the lead is secured to the dropper and an open position in which the lead is separable from the dropper, the catch member being movable relative to the housing towards the open position by application of a force thereto by the hook link, wherein the catch member includes a tongue that acts as a gate to open and close a recess for receiving an eyelet attached to the lead, and wherein the catch member includes a hollow member of which one end projects beyond one end of the housing, the fishing line being threaded, when in use, through the hollow member before being anchored to the housing.

In an embodiment of the invention, the end of the fishing line is anchored to the housing by connection to a ball or member received in a pocket or socket of the housing.

The invention further provide a chod rig including a dropper as set out above, connected to a lead and a fishing line, the chod rig further comprising a hook link slidable along the fishing line anchored to the housing, wherein a gripper bead is fitted to the fishing line between the hook link and the dropper, the catch member of the dropper being movable by the hook link to the open position by sliding of the gripper bead along the fishing line into contact with the catch member.

If desired, a second gripper bead may be fitted to the fishing line on the opposite side of the hook link from the dropper.

### Brief description of the drawings

The invention will now be described further, by way of example, with reference to the accompanying drawings, in which:
Figure 1 is, as previously described, a schematic representation of a chod rig,
Figure 2 is a perspective view of a chod rig employing a dropper of the present invention, and
Figure 3 is a section through the dropper shown in Figure 2.

### Detailed description of the drawings

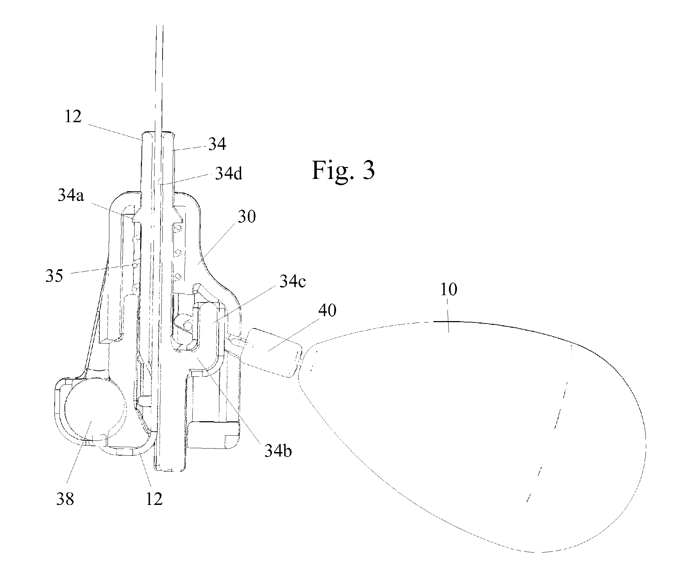

In Figures 2 and 3, the same reference numerals have been retained for describing the components conventionally present in a chod rig and previously described by reference to Figure 1. The essential difference between the rig shown in Figures 2 and 3 and that shown in Figure 1 is that instead of the line 12 being directly connected to the lead 10, it is connected to a dropper 30 which is in turn connected to the lead 10 by way of an optional swivel 40.

The dropper 30 has a housing 32 with a recess 36 in one side for receiving the eyelet at one end of the swivel joint 40. A catch member 34 slidably mounted in the housing 32 serves to retain the eyelet in the recess 36 and to release it when an obstruction is met.

As better shown in the section of Figure 3, the catch member 34 has a branch arm 34b that terminates in a tongue 34c. In the illustrated closed position of the catch member 34, the tongue 34c engages within the eyelet of the swivel 40 connected to the lead 10 to prevent the lead 10 from separating from the dropper 30. The catch member is biased into this closed position by a helical spring 35 that acts between the housing 32 and a collar 34a projecting from the catch member 34.

The main section of the catch member 34 is constructed as a hollow pin with a central bore 34d through which the fishing line 12 is threaded. The end of the fishing line 12 projecting from the opposite side of the housing 32 is connected to a ball 38 that is received in a socket 42 formed on the outside of the housing 32 to anchor the line 12 to the housing 32. It is alternatively possible to use a pin or any other suitable method of anchoring to ensure that the housing 32 is firmly secured to the fishing line 12.

If, while a fish is caught on the hook link 14, the lead 10 becomes entangled in undergrowth, then the resistance offered by the fish will act to drive the hook link 14 and the gripper bead 20 towards the dropper 30. As the fishing line 12 passes through the bore in the catch member 34, the gripper bead 20 will eventually come to rest against the projecting end of the catch member 34 and further force exerted by the fish will act to push the catch member 34 downwards, as viewed, against the action of the spring 35. This will move the catch member 34 towards its open position in which the tongue 34c is retracted from the eyelet of the swivel 40 so as to allow the lead 10 to separate from the dropper 30 and enable the fish to be landed safely.

It will be clear to the person skilled in the art that various modifications may be made to the design of the dropper without departing from the scope of the invention as set out in the appended claims. In particular, rather than the catch member being a hollow pin located within the housing, it may be constructed as a hollow sleeve surrounding the housing to which the line is anchored. The essential principle on which the invention relies is that movement by the hook link of a hollow member through which the fishing line passes is responsible to open a catch that retains the lead on the fishing line.

## Claims

1. A dropper for securing a lead to a fishing line of a chod rig that further includes a hook link slidable along the fishing line relative to the lead, wherein the dropper includes a housing for securing to the fishing line and a resiliently biased catch member slidable relative to the housing between a closed position in which the lead is secured to the dropper and an open position in which the lead is separable from the dropper, the catch member being movable relative to the housing towards the open position by application of a force thereto by the hook link, wherein the catch member includes a tongue that acts as a gate to open and close a recess for receiving an eyelet attached to the lead, and wherein the catch member includes a hollow member of which one end projects beyond one end of the housing, the fishing line being threaded, when in use, through the hollow member before being anchored to the housing.

2. A dropper as claimed in claim 1, further comprising a ball or member received in a pocket or socket of the housing and connectable to the end of the fishing line to anchor the fishing line to the housing.

3. A chod rig including a dropper as claimed in claim 1 or 2, connected to a lead and a fishing line, the chod rig further comprising a hook link slidable along the fishing line anchored to the housing, wherein a gripper bead is fitted to the fishing line between the hook link and the dropper, the catch member of the dropper being movable by the hook link to the open position by sliding of the gripper bead along the fishing line into contact with the catch member.

4. A chod rig as claimed in claim 3, wherein a second gripper bead is be fitted to the fishing line on the opposite side of the hook link from the dropper.
